# EUROPEAN PATENT APPLICATION

(11) **EP 2 985 866 A1**
(43) Date of publication of application: **17.02.2016**
(21) Application number: 14760662.8
(22) Date of filing: 20.02.2014
(51) Int. Cl.: H02J 50/00, H01F 38/14

(54) **WIRELESS POWER SUPPLY SYSTEM**

(30) Priority: 05.03.2013 JP 2013043323
(71) Applicant: Panasonic Intellectual Property Management Co., Ltd., Osaka-shi, Osaka 540-6207 (JP)
(72) Inventor: OGASAWARA, Kiyoshi, 1-61, Shiromi2-chome, Chuo-Ku Osaka-shi Osaka 540-6207 (JP); ABE, Hideaki, 1-61, Shiromi2-chome, Chuo-Ku Osaka-shi Osaka 540-6207 (JP); AKIYAMA, Toshihiro, 1-61, Shiromi2-chome, Chuo-Ku Osaka-shi Osaka 540-6207 (JP)
(74) Representative: Appelt, Christian W.
(86) International application number: PCT/JP2014/000883
(87) International publication number: WO 2014/136391

(57) **Abstract**

A wireless power supply system includes a plurality of primary coils (L1) and a movable secondary coil (L2). The primary coils (L1) excited by the supply of high-frequency current are configured so as to generate an alternating magnetic field by which secondary power is generated in the secondary coil (L2). The resonance characteristics of a resonator including excited primary and secondary coils vary with the movement of the secondary coil within a varying range. The power supply frequency (fn) of the high-frequency current is set to the frequency (fp) corresponding to the intersecting point (P) between a first resonance characteristic line (A1) and a second resonance characteristic line (A2), which correspond to the respective two ends of the varying range of the resonance characteristics and are farthest apart from each other.

## Description

The present invention relates to a wireless power supplying system.

A wireless power supplying system including a plurality of primary coils that generate alternating magnetic fields and a secondary coil that generates secondary power through electromagnetic induction is known in the art. The secondary coil is arranged to be movable along a movement path extending over the primary coils. The wireless power supplying system including the movable secondary coil is capable of supplying power to a movable load device without using an electric cord. Thus, the wireless power supplying system does not adversely affect the mobility of the movable load device. In such a wireless power supplying system, the secondary power generated at the movable secondary coil may change as the secondary coil moves.

Patent Document 1 discloses an example of a wireless power supplying system configured to reduce changes in the secondary power when the secondary coil moves. The system changes the frequency of the high-frequency current supplied to each primary coil to specify the primary coil that is strongly and electromagnetically coupled to the secondary coil. Then, the system excites the strongly and electromagnetically coupled primary coil.

Patent Document 1: Japanese Laid-Open Patent Publication No. 2011-199975

The above wireless power supplying system needs to perform frequency control that changes the frequency of the high-frequency current supplied to the primary coils in a complicated manner. Thus, the circuit of the power supplying device becomes complicated and large in scale.

It is an object of the present invention to provide a wireless power supplying system that is capable of narrowing the varying range of the voltage output from a secondary coil when the secondary coil moves even if the frequency of the high-frequency current supplied to primary coils is not changed when the secondary coil moves.

A wireless power supplying system according to one aspect of the present invention includes a plurality of primary coils and a secondary coil. Each primary coil is wound around a primary core. The primary coils are arranged at equal intervals. The secondary coil is wound around a secondary core and is configured to move along a movement path while opposed to the primary coils. A primary coil excited when supplied with high-frequency current is configured to generate an alternating magnetic field that generates secondary power at the secondary coil. A resonant circuit including the excited primary coil and the secondary coil has a resonant characteristic changed in a varying range when the secondary coil moves. A power supplying frequency of the high-frequency current is set to a frequency corresponding to an intersecting point of a first resonant characteristic line and a second resonant characteristic line that respectively correspond to two ends of the varying range of the resonant characteristic and are most separated from each other.

When a length of each primary coil measured along the movement path is set to X1 and a length of the secondary coil measured along the movement path is set to X2, it is preferred that the length of the primary coil and the length of the secondary coil satisfy X2≥5×X1.

When an interval between the primary coils is set to Z1, it is preferred that the interval between the primary coils and the length of the primary coil satisfy Z1 <X1.

In one example, each of the primary cores and the secondary core are C-shaped or E-shaped and each of the primary coils and the secondary coil are coils forming a closed magnetic circuit. When a length of each of the primary cores is set to X1, a length of the secondary core is set to X2, and an interval between the primary cores is set to Z1, the length of each primary core, the length of the secondary core, and the interval between the primary cores satisfy Z1≤X1 and X2≥2×X1+Z1.

A contactless power supplying system according to another aspect of the present invention includes a power receiving device including a secondary coil arranged to be movable along a movement path and a power supplying device including a plurality of primary coils arranged in the movement path at equal intervals. A resonant frequency of a primary resonant circuit, which includes a primary coil supplied with high-frequency current, and a secondary resonant circuit, which includes the secondary coil, changes in a varying range between a first end resonant frequency and a second end resonant frequency when the secondary coil moves along the movement path. The power supplying device includes a coil exciting circuit configured to supply high-frequency current of a fixed frequency to a primary coil that is to be excited. The fixed frequency is set to a frequency corresponding to an intersecting point of a first resonant characteristic line, which includes a peak at the first end resonant frequency, and a second resonant characteristic line, which includes a peak at the second end resonant frequency.

A further aspect of the present invention provides a method for operating a wireless power supplying system including a power receiving device including a secondary coil arranged to be movable along a movement path and a power supplying device including a plurality of primary coils arranged in the movement path at equal intervals. A resonant frequency of a primary resonant circuit, which includes a primary coil supplied with high-frequency current, and a secondary resonant circuit, which includes the secondary coil, changes in a varying range between a first end resonant frequency and a second end resonant frequency when the secondary coil moves along the movement path. The method for operating a wireless power supplying system includes specifying a frequency corresponding to an intersecting point of a first resonant characteristic line, which includes a peak at the first end resonant frequency, and a second resonant characteristic line, which includes a peak at the second end resonant frequency, setting the frequency corresponding to the intersecting point as a fixed frequency of the high-frequency current supplied to the primary coils, and supplying the high-frequency current having the fixed frequency to an excited coil.

In the present invention, it is possible to narrow the varying range of the voltage output from a secondary coil when the secondary coil moves even if the frequency of the high-frequency current supplied to primary coils is not changed when the secondary coil moves.
Fig. 1 is a perspective view showing a first embodiment of a wireless power supplying system.
Fig. 2 is a perspective view showing primary coils and a secondary coil.
Fig. 3A is a perspective view showing the primary coil, and Fig. 3B is a perspective view showing the secondary coil.
Fig. 4A is a diagram showing the size and layout of the primary coils, and Fig. 4B is a diagram showing the size of the secondary coil.
Fig. 5 is a block diagram showing the wireless power supplying system.
Fig. 6 is a circuit diagram showing an inverter circuit included in the wireless power supplying system.
Fig. 7 is a graph showing resonant characteristics of the wireless power supplying system.

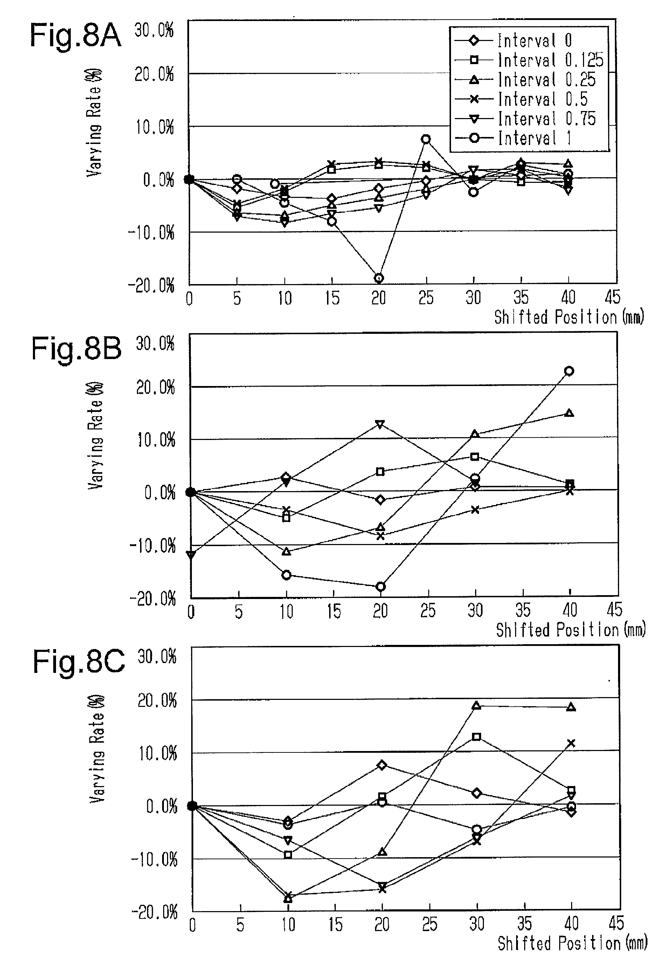

Fig. 8A is a graph showing the varying rate of the leakage inductance that changes in accordance with the interval Z1 and a shifted position when a second width is five times larger than a first width, Fig. 8B is a graph showing the varying rate of the leakage inductance that changes in accordance with the interval Z1 and the shifted position when the second width is four times larger than the first width, and Fig. 8C is a graph showing the varying rate of the leakage inductance that changes in accordance with the interval Z1 and the shifted position when the second width is three times larger than the first width.
Fig. 9A is a graph showing the output voltage that changes in accordance with the shifted position and the frequency when the interval Z1 is equal to the first width, and Fig. 9B is a graph showing the output voltage that changes in accordance with the shifted position and the frequency when the interval Z1 is 0.5 times larger than the first width.
Fig. 10A is a graph showing the output voltage that changes in accordance with the shifted position and the frequency when the interval Z1 is 0.25 times larger than the first width, and Fig. 10B is a graph showing the output voltage that changes in accordance with the shifted position and the frequency when the interval Z1 is 0.125 times larger than the first width.
Fig. 11 is a perspective view showing primary coils and a secondary coil in a second embodiment of a wireless power supplying system.
Fig. 12A is a graph showing the output voltage that changes in accordance with a shifted position and a frequency when the interval Z1 is 1.5 times larger than a first width, and Fig. 12B is a graph showing the output voltage that changes in accordance with the shifted position and the frequency when the interval Z1 is 1.2 times larger than the first width.
Fig. 13A is a graph showing the output voltage that changes in accordance with the shifted position and the frequency when the interval Z1 is equal to the first width, and Fig. 13B is a graph showing the output voltage that changes in accordance with the shifted position and the frequency when the interval Z1 is 0.5 times larger than the first width.
Fig. 14A is a graph showing the output voltage that changes in accordance with the shifted position and the frequency when the interval Z1 is 0.25 times larger than the first width, and Fig. 14B is a graph showing the output voltage that changes in accordance with the shifted position and the frequency when the interval Z1 is 0.125 times larger than the first width.

### First Embodiment

A first embodiment of a wireless power supplying system will now be described with reference to the drawings.

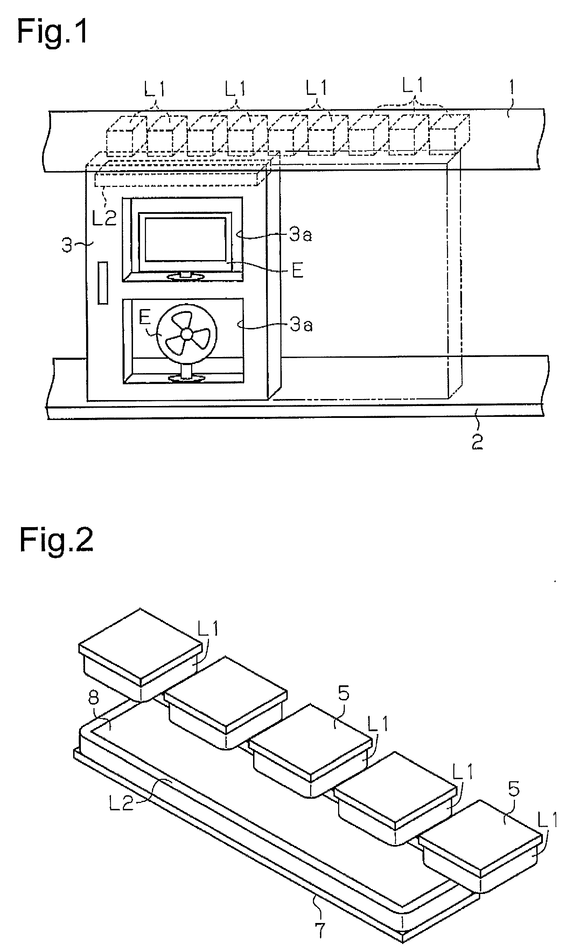

The wireless power supplying system includes a plurality of primary coils L1 and a movable secondary coil L2. In the example shown in Fig. 1, the primary coils L1 may be arranged at predetermined intervals along a movement path such as a groove formed in a door frame 1 of a room. The secondary coil L2 is arranged in a sliding door 3, which may be arranged to be movable between the frame 1 and a frame 2. The sliding door 3 is supported by the frame 1 and/or the frame 2 and moves along the movement path between the position shown by solid lines and the position shown by broken lines in Fig. 1.

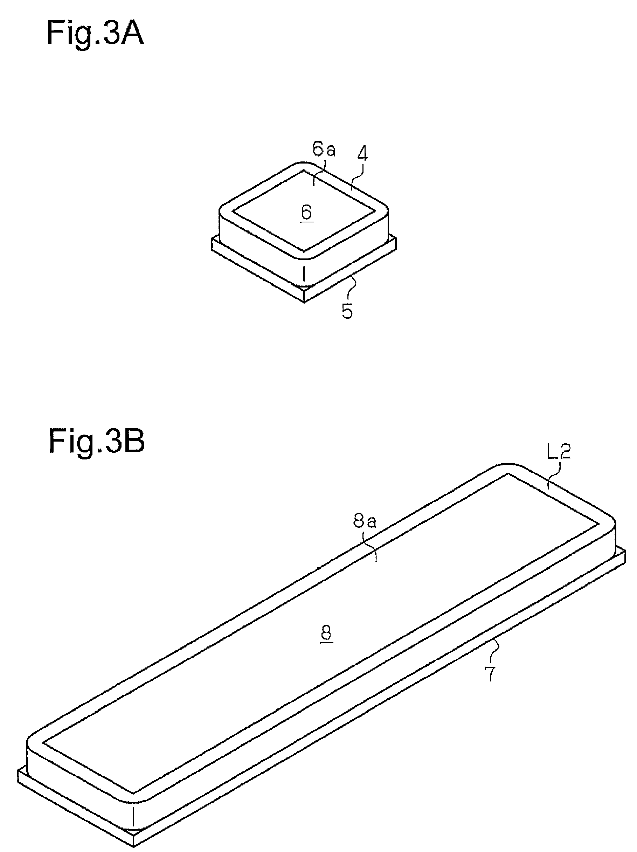

As shown in Figs. 2 and 3A, the primary coils L1 are wound around primary cores 6. Each primary core 6 may be, for example, a magnetic body that has the form of a square prism and is fixed on a square substrate 5. Each primary core 6 includes a power supplying surface 6a at the opposite side of a substrate 5. The power supplying surface 6a may be, for example, a regular square. The power supplying surface 6a faces an upper surface of the sliding door 3. Thus, the coil surface of each primary coil L1 is arranged in parallel to the upper surface of the sliding door 3.

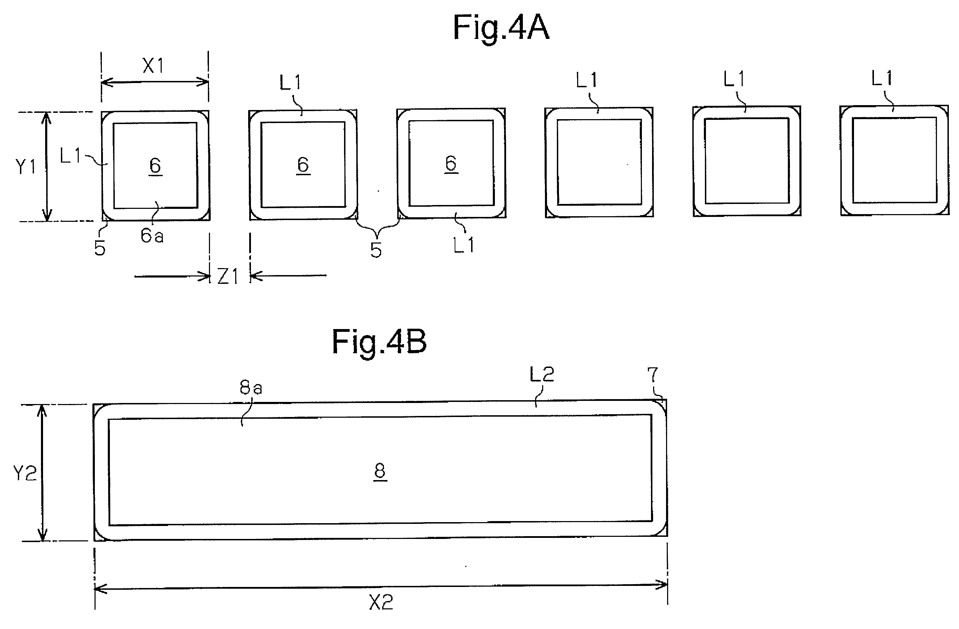

In the following description, as shown in Fig. 4A, the length of each primary coil L1, which is measured along the movement path, is referred to as the first width X1, the length of each primary coil L1 in a direction orthogonal to the movement path is referred to as the first height Y1, and the interval between adjacent primary coils L1 is referred to as the interval Z1. When the primary core 6 has the form of a prism square, the first width X1 is equal to the first height Y1 (X1=Y1).

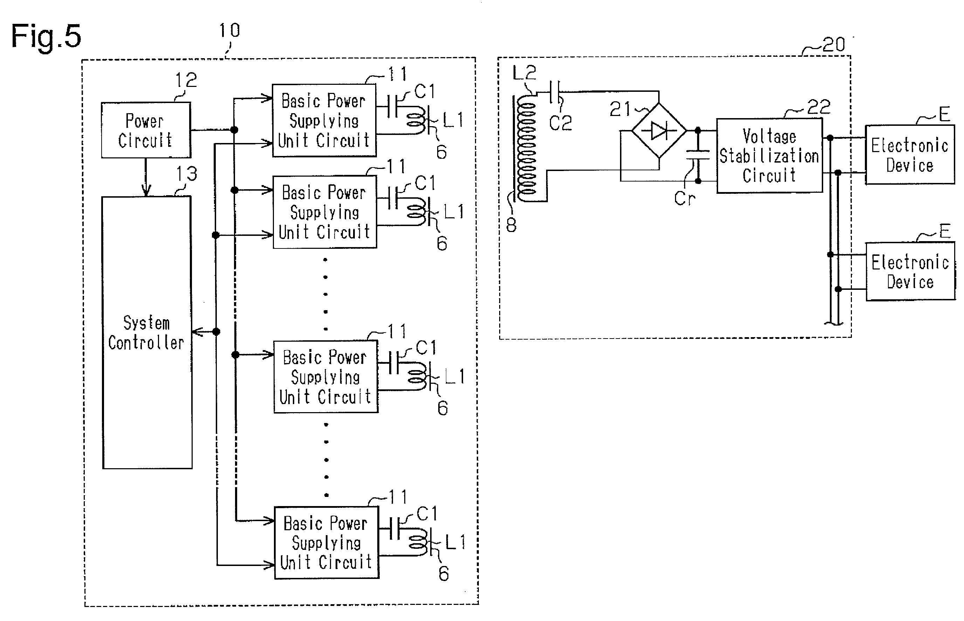

A power supplying device 10 (refer to Fig. 5) is incorporated in the frame 1. The power supplying device 10 includes a basic power supplying unit circuit 11 (refer to Fig. 5), which is arranged in each primary coil L1. Each primary coil L1 is formed to generate an alternating magnetic field when supplied with high-frequency current from the corresponding basic power supplying unit circuit 11.

The sliding door 3, which serves as a movable body, may be, for example, a rectangular plate member of wood, glass, plastic, a wall material, or the like. The sliding door 3 includes a setting surface or an accommodation cavity 3a where an electric device E can be set. Fig. 1 shows two accommodation cavities 3a, which are arranged one above the other. The electric devices E, such as a flat panel television and a fan, may be set in the accommodation cavities 3a. The electric device E is not particularly limited. The electric device E may be, for example, a digital photo frame, a lighting device including an LED or an organic EL, a portable terminal, or the like.

The secondary coil L2 includes, for example, a rectangular coil surface. The secondary coil L2 is arranged in the sliding door 3 so that the longitudinal axis of the secondary coil L2 extends along the movement path. As shown in Figs. 2 and 3B, the secondary coil L2 is wound around a secondary core 8. The secondary core 8 may be, for example, a magnetic body that has the form of a rectangular prism and is fixed on a rectangular substrate 7.

The secondary coil L2 may be arranged in the upper portion of the sliding door 3, which is engageable with a groove of the frame 1. As shown in Fig. 2, the secondary core 8 includes a power receiving surface 8a at the opposite side of the substrate 7. The power receiving surface 8a is, for example, rectangle. The power receiving surface 8a is opposed and parallel to the groove surface of the frame 1. The coil surface of the secondary coil L2 is parallel to the groove surface of the frame 1. Thus, the coil surface of the secondary coil L2 is arranged parallel to the coil surfaces of the primary coils L1.

The secondary coil L2 generates secondary power through electromagnetic induction that is based on the alternating magnetic field generated by each driven primary coil L1. The secondary power generated by the secondary coil L2 is supplied to a power receiving device 20 (refer to Fig. 5), which is arranged in the sliding door 3.

In the following description, as shown in Fig. 4B, the length of the secondary coil L2, which is measured along the movement path, is referred to as the second width X2, and the length of the secondary coil L2 in a direction orthogonal to the movement path is referred to as the second height Y2.

The electric circuits of the power supplying device 10 and the power receiving device 20 will now be described with reference to Fig. 5.

The power receiving device 20 includes the secondary coil L2 and the secondary core 8. The secondary coil L2 is connected in series to a secondary resonant capacitor C2. The series circuit of the secondary coil L2 and the secondary resonant capacitor C2 functions as a secondary resonant circuit. The secondary coil L2 generates secondary power in the alternating magnetic field generated by each primary coil L1, which is driven in the power supplying device 10. The secondary resonant circuit, which is formed by the secondary coil L2 and the secondary resonant capacitor C2, is connected to a full-wave rectification circuit 21.

The full-wave rectification circuit 21 rectifies the secondary power received by the secondary coil L2 and outputs the rectified output voltage to a voltage stabilization circuit 22 via a smoothing capacitor Cr. The voltage stabilization circuit 22 includes a DC/DC converter, which converts the voltage from the full-wave rectification circuit 21 into a predetermined voltage such as the commercial voltage of a commercial power supply frequency. The converted voltage is supplied from the output terminal of the power receiving device 20 to the electric device E. In this manner, the wireless power supplying system is capable of supplying power to the movable electric device E together with a movable body such as the sliding door 3.

As shown in Fig. 5, the power supplying device 10 includes the basic power supplying unit circuit 11, which is arranged in each primary coil L1. The power supplying device 10 includes a power supply circuit 12 and a system controller 13, which controls the basic power supplying unit circuit 11.

The power supply circuit 12 includes a rectification circuit and a DC/DC converter. The rectification circuit rectifies the commercial power supply supplied from outside the power supplying device 10. The DC/DC converter converts the rectified DC voltage into a desired voltage and supplies the DC voltage Vdd as driving power to the system controller 13 and to each basic power supplying unit circuit 11.

The system controller 13 is, for example, a microcomputer. The system controller 13 stores a control program that controls the basic power supplying unit circuits 11.

Each basic power supplying unit circuit 11 is capable of communicating data with the system controller 13. The basic power supplying unit circuits 11 have the same circuit configuration.

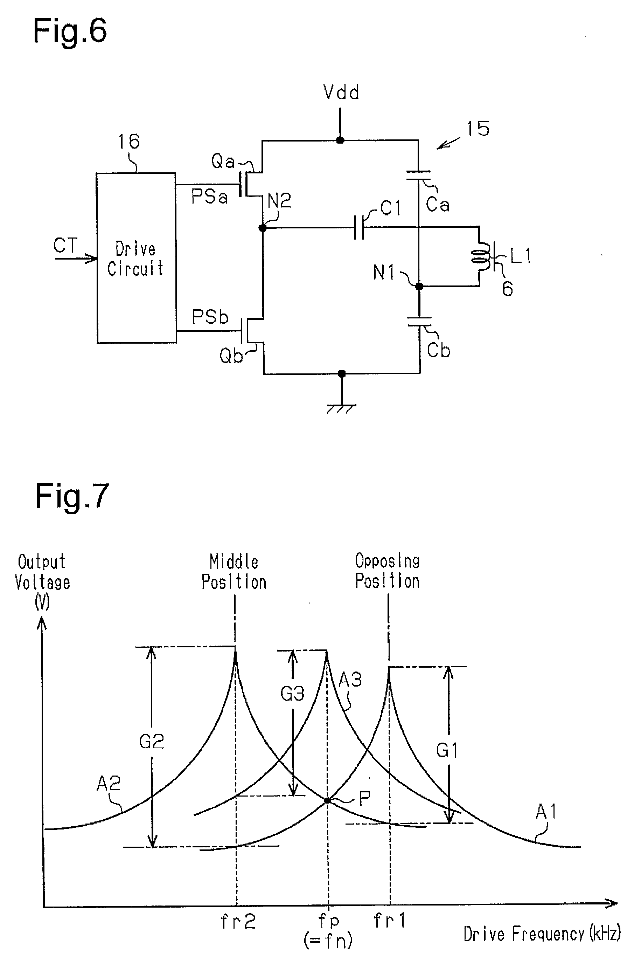

As shown in Fig. 6, the basic power supplying unit circuit 11 includes an inverter circuit 15 and a drive circuit 16. The inverter circuit 15 may be a known half-bridge circuit. In the shown example, the inverter circuit 15 includes a voltage dividing circuit, which includes a first capacitor Ca and a second capacitor Cb that are connected in series, and a drive circuit, which includes a first transistor Qa and a second transistor Qb that are connected in series. The drive circuit is connected in parallel to the voltage dividing circuit. The first and second power transistors Qa and Qb are, for example, N-channel MOSFETs.

The series circuit of the primary coil L1 and the primary resonant capacitor C1 functions as a primary resonant circuit. The primary resonant circuit is connected between a connection point N1 of the first and second capacitors Ca and Cb and a connection point N2 of the first and second power transistors Qa and Qb.

Drive signals PSa and PSb from the drive circuit 16 are respectively input to the gate terminals of the first power transistor Qa and the second power transistor Qb. The first and second power transistors Qa and Qb are alternately activated and deactivated based on the drive signals PSa and PSb, which are respectively input to the gate terminals. This generates the high-frequency current supplied to the primary coils L1. The primary coils L1 generate alternating magnetic fields when supplied with the high-frequency current.

The drive circuit 16 receives, from the system controller 13, an exciting control signal CT, which sets the frequency of the high-frequency current supplied to the primary coils L1, and generates the drive signals PSa and PSb, which are respectively output to the first and second power transistors Qa and Qb. For example, the drive circuit 16 alternately activates and deactivates the first and second power transistors Qa and Qb based on the exciting control signal CT to generate the drive signals PSa and PSb, which set the high-frequency current supplied to the primary coils L1 to a power supplying frequency fn.

The exciting control signal CT from the system controller 13 is a data signal that determines the power supplying frequency fn of the high-frequency current supplied to the primary coils L1. The system controller 13, the inverter circuit 15, and the drive circuit 16 form an example of a coil exciting circuit.

The power supplying frequency fn will now be described.

The secondary coil L2 is moved along the movement path, which includes a plurality of primary coils L1 arranged at regular intervals. The positions where a front end and a rear end of the secondary coil L2 are located when movement of the secondary coil L2 starts are referred to as the starting front end position and the starting rear end position. The secondary coil L2 is moved along the movement path until the rear end of the secondary coil L2 reaches the starting front end position.

The resonant characteristics of the resonant circuit, which change in accordance with the relative positions of the primary coils L1 and the secondary coil L2, were obtained. More specifically, the output voltages of the secondary coil L2 for the frequency of high-frequency current were obtained at various positions in the movement range of the secondary coil L2. The results are shown in Fig. 7. Movement of the secondary coil L2 changes the relative positions of the secondary coil L2 and the primary coils L1 and changes the resonant characteristics.

As shown in Fig. 7, the resonant frequency varies in a varying range defined by frequencies fr1 and fr2 at various positions in the movement range of the secondary coil L2. The frequencies fr1 and fr2 are the two most separated resonant frequencies in the varying range and may be referred to as the first end resonant frequency and the second end resonant frequency. Characteristic lines A1 and A2 indicate the resonant characteristics of the resonant frequencies fr1 and fr2 and may be referred to as the first resonant characteristic line A1 and the second resonant characteristic line A2. When the output voltage reaches the peak of the resonant frequency fr1, the secondary coil L2 is, for example, located at a position opposing a primary coil L1. When the output voltage reaches the peak of the resonant frequency fr2, the secondary coil L2 is, for example, located at a middle position between primary coils L1.

The power supplying frequency fn is set to a frequency fp that corresponds to an intersecting point P of the first resonant characteristic line A1 and the second resonant characteristic line A2 for the reasons described below.

For example, when the primary coil L1 is excited at the resonant frequency fr1, power supplying would be performed most efficiently if the secondary coil L2 is arranged at the opposing position but would be performed least efficiently if the secondary coil L2 is located at the middle position. In this case, as shown in Fig. 7, an output voltage varying range G1 of the output voltage corresponding to the resonant frequency fr1 would be large. When the primary coil L1 is excited at the resonant frequency fr2, power supplying would be performed most efficiently if the secondary coil L2 is arranged at the middle position but would be performed least efficiently if the secondary coil L2 is arranged at the opposing position. In this case, as shown in Fig. 7, a varying range G2 of the output voltage corresponding to the resonant frequency fr2 would be large.

In this manner, when the resonant frequency fr1, which is the peak of the first resonant capacity line A1, or the resonant frequency fr2, which is the peak of the second resonant capacity line A2, is set to the power supplying frequency fn, the output voltage varying ranges G1 and G2 of the secondary coil L2 would be large. Thus, the resonant frequencies fr1 and fr2 are not suitable for the power supplying device 10 that supplies power to the power receiving device 20, which is arranged in the sliding door 3. In the power receiving device 20 (secondary coil L2), it is desirable that the range of the maximum value and the minimum value of the output voltage be small when the sliding door 3 moves, that is, the varying range of the output voltage be small.

Thus, in the embodiment, as shown in Fig. 7, the frequency fp corresponding to the intersecting point P of the first resonant characteristic line A1 and the second resonant characteristic line A2 is set to the power supplying frequency fn so that the varying range G3 of the output voltage becomes small. A third resonant characteristic line A3, of which the peak is the frequency fp (resonant frequency), is located between the first resonant characteristic line A1 and the second resonant characteristic line A2. The frequency fp in the frequency range between the most separated resonant frequencies fr1 and fr2 has the smallest output voltage varying range G3 when the sliding door 3 moves.

The geometric conditions of each primary coil L1 and the secondary coil L2 will now be described.

The second height Y2 of the secondary coil L2 and the first height Y1 of the primary coil L1 satisfy Y2≥Y1. The second width X2 of the secondary coil L2 and the first width X1 of the primary coil L1 satisfy X2≥5×X1. The interval Z1 between the primary coils L1 and the first width X1 (may be equal to Y1) of the primary coil L1 satisfy Z1<X1.

When these geometric conditions are satisfied, the varying rate (%) of the leakage inductance of the secondary coil L2 and the primary coil L1 that is opposed to the secondary coil L2 is less than ±10% regardless of where the sliding door 3 is located.

Referring to Figs. 8A, 8B, and 8C, the results of experiments conducted to measure the leakage inductance varying rate (%) relative to the shifting of the secondary coil L2 and the primary coils L1 will now be described. In Figs. 8A, 8B, and 8C, a plurality of line charts each correspond to various intervals Z1.

In Fig. 8A, the second width X2 of the secondary coil L2 is fixed to five times larger than X1 (5×X1). The power supplying frequency fn is fixed to the frequency fp corresponding to the intersecting point P of the first resonant characteristic line A1 and the second resonant characteristic line A2, which are most separated under this geometric condition. The first width X1 (=Y1) of the primary coil L1 is 42 mm. Thus, the second width X2 of the secondary coil L2 is 210 mm (=5×X1).

As is obvious from Fig. 8A, when X2=5×X1 is satisfied, the leakage inductance (%) is less than ±10% when the interval Z1 is 0, 0.125×X1, 0.25×X1, or 0.75×X1 but not when the interval Z1 is 1×X1.

In Fig. 8B, the second width X2 of the secondary coil L2 is fixed to four times larger than X1 (X2=4×X1). The power supplying frequency fn is fixed to the frequency fp corresponding to the intersecting point P of the first resonant characteristic line A1 and the second resonant characteristic line A2, which are most separated under this geometric condition. The first width X1 (=Y1) of the primary coil L1 is 42 mm. Thus, the second length of the secondary coil L2 is 168 mm (=4×X1).

As is obvious from Fig. 8B, when X2=4×X1 is satisfied, the leakage inductance (%) is greater than or equal to ±10% when the interval Z1 is 0.25×X1, 0.75×X1, or 1×X1.

In Fig. 8C, the second width X2 of the secondary coil L2 is fixed to three times larger than X1 (X2=3×X1). The power supplying frequency fn is fixed to the frequency fp corresponding to the intersecting point P of the first resonant characteristic line A1 and the second resonant characteristic line A2, which are most separated under this geometric condition. The first width X1 (=Y1) of the primary coil L1 is 42 mm. Thus, the second length of the secondary coil L2 is 126 mm (=3×X1).

As is obvious from Fig. 8C, when X2=3×X1 is satisfied, the leakage inductance (%) is greater than or equal to ±10% when the interval Z1 is 0.125×X1, 0.25×X1, 0.5×X1, or 0.75×X1.

As is obvious from Figs. 8A, 8B, and 8C, when the second width X2 of the secondary coil L2 is five times larger than X1 (X2=5×X1), the varying rate (%) of leakage inductance of the secondary coil L2 and the primary coils L1 that oppose the secondary coil L2 can be set to be less than ±10% regardless of where the sliding door 3 is moved relative to each primary coil L1. When the second width X2 of the secondary coil L2 exceeds a value that is five times larger than X1 (X2>5×X1), the varying rate (%) of leakage inductance is expected to further decrease. Thus, it is preferred that the second width X2 of the secondary coil L2 be at least five times larger than X1 (X2 ≥5×X1).

Decreasing the varying rate (%) of leakage inductance means shortening the interval between the first and second resonant characteristic lines A1 and A2 that are most separated. As the first resonant characteristic line A1 and the second resonant characteristic line A2 become closer to each other, the output voltage of the intersecting point P increases. As a result, the output voltage increases and the varying range G3 further decreases when the frequency fp corresponding to the intersecting point P is used as the power supplying frequency fn.

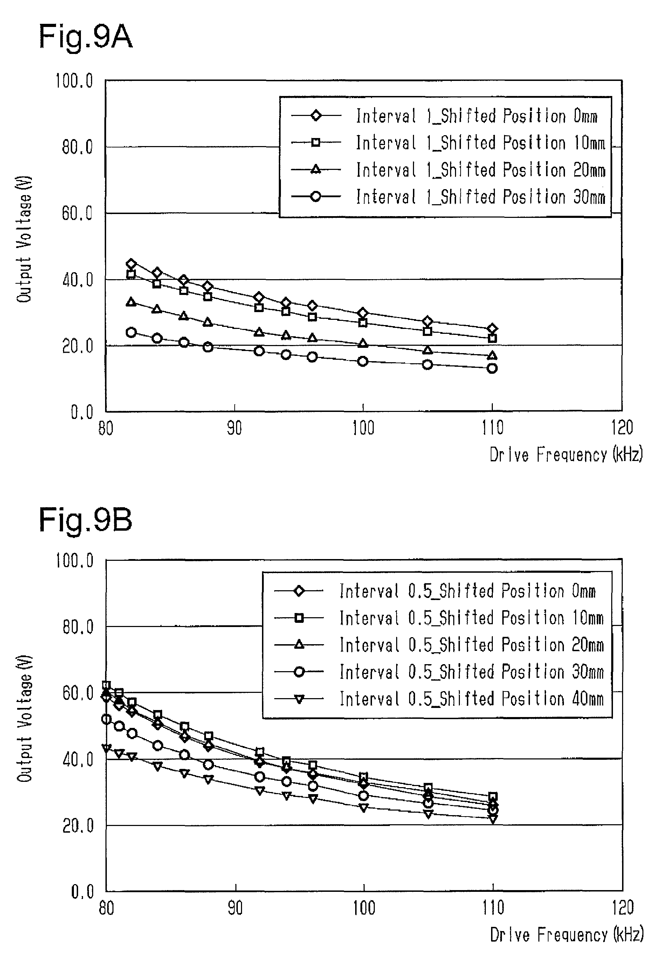

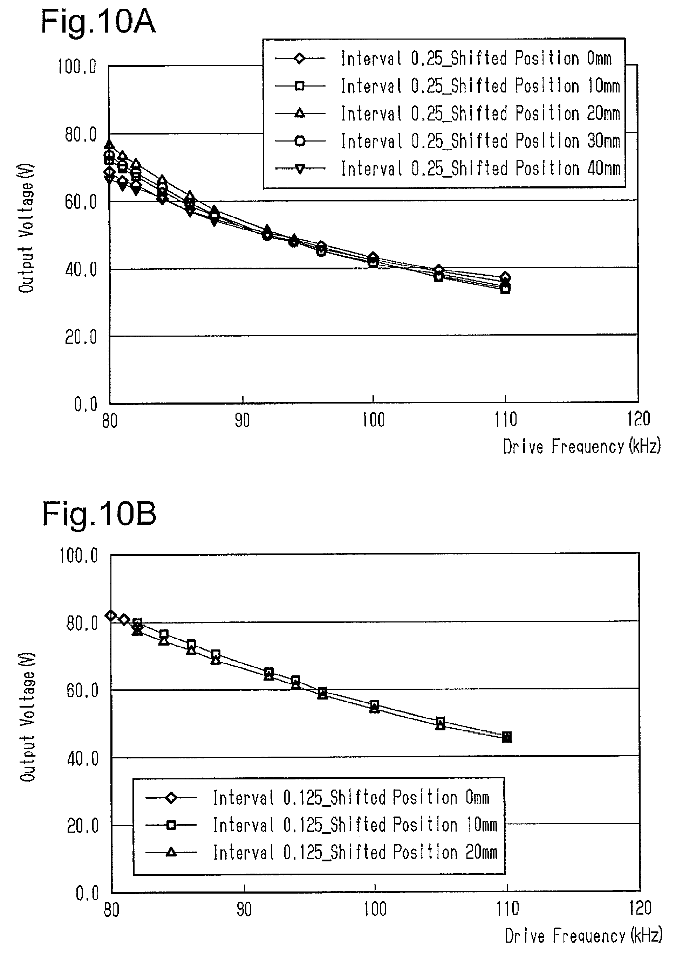

Referring to Figs. 9A, 9B, 10A, and 10B, the interval Z1 between the primary coils L1 when the second width X2 of the secondary coil L2 is fixed to X2=5×X1 will now be described. Figs. 9A, 9B, 10A, and 10B each show a plurality of resonant characteristic lines respectively corresponding to various shifting amounts. Each resonant characteristic line shows the change in output voltage for a frequency. In this specification, the shifted position refers to a shifted length of an edge of the coil surface of the secondary coil L2 from an edge of the coil surface of a primary coil L1 in the movement direction when the coil surface of the secondary coil L2 opposes the coil surface of the primary coil L1.

In Fig. 9A, the interval Z1 is equal to the first width X1 (Z1=X1). The first width X1 (=Y1) of the primary coil L1 is 42 mm. The second width X2 of the secondary coil L2 is 210 mm (=5×X1). The interval Z1 is 42 mm (=X1). The relationship of the drive frequency (frequency of high-frequency current supplied to primary coils L1) and the output voltage was obtained for the shifted positions of 0 mm, 10 mm, 20 mm, and 30 mm. As is obvious from Fig. 9A, when the interval Z1 is equal to the first width X1, the resonant characteristic lines corresponding to various shifted positions are greatly separated from one another.

In Fig. 9B, the interval Z1 is 0.5 times larger than the first width X1 (Z1=X1/2). The first width X1 (=Y1) of the primary coil L1 is 42 mm. The second width X2 of the secondary coil L2 is 210 mm (=5×X1). The interval Z1 is 21 mm (=X1/2). The relationship of the drive frequency (frequency of high-frequency current supplied to primary coils L1) and an output voltage was measured for the shifted positions of 0 mm, 10 mm, 20 mm, 30 mm, and 40 mm. As is obvious from Fig. 9B, when the interval Z1 is 0.5 times larger than the first width X1, the resonant characteristic lines corresponding to various shifted positions are closer to one another than those of Fig. 9A.

In Fig. 10A, the interval Z1 is 0.25 times larger than the first width X1 (Z1=X1/4). The first width X1 (=Y1) of the primary coil L1 is 42 mm. The second width X2 of the secondary coil L2 is 210 mm (=5×X1). The interval Z1 is 10.5 mm (=X1/4). The relationship of the frequency (frequency of high-frequency current supplied to primary coils L1) and an output voltage was measured for the shifted positions of 0 mm, 10 mm, 20 mm, 30 mm, and 40 mm. As is obvious from Fig. 10A, when the interval Z1 is 0.24 times larger than the first width X1, the resonant characteristic lines corresponding to various shifted positions substantially coincide with one another.

In Fig. 10B, the interval Z1 is 0.125 times larger than the first width X1 (Z1=X1/8). The first width X1 (=Y1) of the primary coil L1 is 42 mm. The second width X2 of the secondary coil L2 is 210 mm (=5×X1). The interval Z1 is 5.25 mm (=X1/8). The output voltages corresponding to various frequencies were measured for the shifted positions of 0 mm, 10 mm, and 20 mm. As is obvious from Fig. 10B, when the interval Z1 is 0.125 times larger than the first width X1, the resonant characteristic lines corresponding to various shifted positions substantially coincide with one another.

As is obvious from Figs. 9A, 9B, 10A, and 10B, when X2=5×X1 is satisfied, if the interval Z1 satisfies Z1<X1, the first resonant characteristic line A1 and the second resonant characteristic line A2 become closer to each other regardless of where the sliding door 3 is moved to, and the change in output voltage is reduced. In particular, the first resonant characteristic line A1 substantially coincides with the second resonant characteristic line A2 when Z1<(X1/4) is satisfied.

Accordingly, the output voltage increases and the varying range G3 further decreases in the configuration in which the coils are arranged so that the interval Z1 satisfies the above geometric condition and in which the frequency fp corresponding to the intersecting point P of the first resonant characteristic line A1 and the second resonant characteristic line A2 is used as the power supplying frequency fn.

The operation of the above wireless power supplying system will now be described.

Each primary coil L1 arranged in the door frame 1 is excited by the high-frequency current of the power supplying frequency fn supplied from each basic power supplying unit circuit 11 to generate an alternating magnetic field. The power supplying frequency fn is set to the frequency fp, which corresponds to the intersecting point P of the first resonant characteristic line A1 and the second resonant characteristic line A2 that are most separated from each other in the varying range of a resonant characteristic line of the resonant circuit that changes in accordance with the relative position of the excited primary coil L1 and the secondary coil L2.

When the sliding door 3 is moved along the door frames 1 and 2 under such a condition, the varying range of the output voltage in the secondary coil L2 is relatively small regardless of where the sliding door 3 is located. Further, since the second width X2 of the secondary coil L2 satisfies X2=5×X1, the leakage inductance varying rate (%) of the secondary coil L2 and the primary coils L1 that oppose the secondary coil L2 is less than ±10% regardless of where the sliding door 3 is moved to. This shortens the interval between the first resonant characteristic line A1 and the second resonant characteristic line A2, which are most separated. Thus, the output voltage increases and the varying range G3 further decreases in the configuration in which the frequency fp corresponding to the intersecting point P is used as the power supplying frequency fn.

When the interval Z1 between the primary coils L1 satisfies Z1<X1, the first resonant characteristic line A1 and the second resonant characteristic line A2 are close to each other regardless of where the sliding door 3 is moved to. In particular, when Z1<(X1/4) is satisfied, the first resonant characteristic line A1 and the second resonant characteristic line A2 substantially coincide with each other. Thus, the output voltage further increases and the varying range G3 further decreases in the configuration in which the frequency fp corresponding to the intersecting point P of the first resonant characteristic line A1 and the second resonant characteristic line A2 is used as the power supplying frequency fn.

The output voltage generated at the secondary coil L2 is rectified at the full-wave rectification circuit 21 of the power receiving device 20. The rectified output voltage is output to the voltage stabilization circuit 22 and then output to the electric device E to drive the electric device E.

The first embodiment has the advantages described below.

In the first embodiment, the power supplying frequency fn of the high-frequency current supplied to the primary coils L1 is set to the frequency fp corresponding to the intersecting point P of the first resonant characteristic line A1 and the second resonant characteristic line A2, which are most separated from each other in the varying range. Regardless of where the secondary coil L2 is arranged in the movement range of the sliding door 3, the difference between the maximum value and the minimum value of the output voltage obtained at each position, i.e., the varying range G3 of the output voltage, can be reduced. As a result, stable output voltage can be supplied to the device E regardless of where the sliding door 3 is located.

The frequency fp, which is used as the power supplying frequency fn, is set in advance based on the intersecting point P of the first and second resonant characteristics A1 and A2. Thus, it is only required that the power supplying device 10 supply the high-frequency current having the power supplying frequency fn, which is set in advance, to the primary coils L1. This simplifies the control for the basic power supplying unit circuit 11, simplifies the circuit configuration, and reduces the circuit scale.

In the first embodiment, the second width X2 of the secondary coil L2 satisfies X2=5×X1. Thus, the leakage inductance varying rate (%) of the secondary coil L2 and the primary coils L1 that oppose the secondary coil L2 can be set to be less than ±10% regardless of where the sliding door 3 is moved to. This shortens the interval between the first resonant characteristic line A1 and the second resonant characteristic line A2, which are most separated. As a result, the output voltage increases and the varying range G3 of the output voltage further decreases in the configuration in which the frequency fp corresponding to the intersecting point P is used as the power supplying frequency fn.

In the first embodiment, the interval Z1 between the primary coils L1 satisfies Z1<X1. Thus, the first resonant characteristic line A1 and the second resonant characteristic line A2 are close to each other regardless of where the sliding door 3 is moved to. In particular, when Z1<X1/4 is satisfied, the first resonant characteristic line A1 substantially coincides with the second resonant characteristic line A2.

Accordingly, the output voltage may be further increased and the varying range G3 of the output voltage may be further decreased in the configuration in which the frequency fp corresponding to the intersecting point P of the first resonant characteristic line A1 and the second resonant characteristic line A2 is used as the power supplying frequency fn.

### Second Embodiment

A second embodiment will now be described. The features of the second embodiment are in the configuration and layout of the primary coils L1 and the secondary coil L2. In the second embodiment, the features will be described in detail and components that are the same as the first embodiment will not be described.

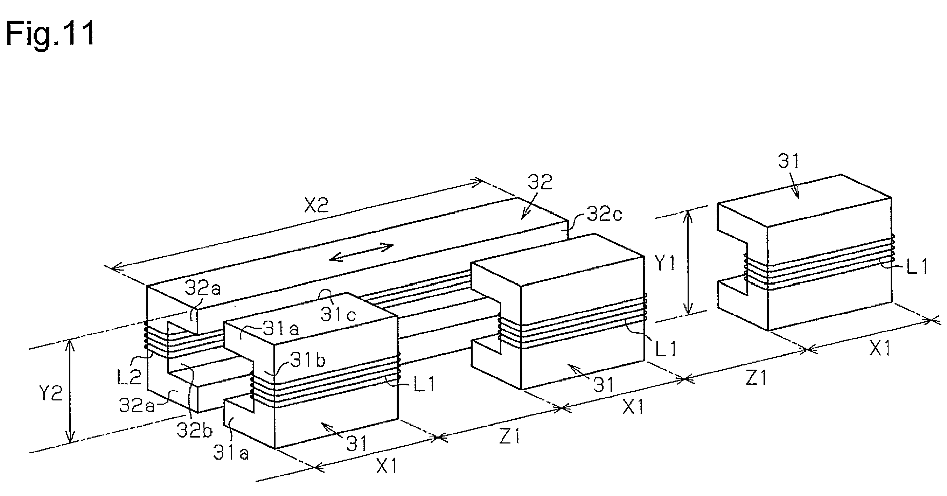

Fig. 11 shows the layout of the primary coils L1 relative to the second coil L2. Each of primary cores 31 is a magnetic body having a C-shaped cross-section, i.e., a C-shaped core. Each primary core 31 includes two side portions 31a and an intermediate portion 31 b, which is located between the two side portions 31a. Each primary coil L1 is wound around the intermediate portion 31b of the primary core 31. Each side portion 31 a includes a power supplying surface 31c. The primary coil L1 is a coil that forms a closed magnetic circuit and is wound around the primary core 31, which has the form of a C-shaped magnetic body.

The primary cores 31 and the primary coils L1 are arranged at equal intervals along the movement path of the sliding door 3. The two power supplying surfaces 31c of each primary core 31 oppose the upper surface of the sliding door 3. Each primary core 31 is arranged so that a line connecting the two side portions 31 a extends orthogonal to the movement path of the sliding door 3.

In the following description, the length of the primary core 31, which is measured along the movement path, will be referred to as the first width X1, the length of the primary core 31 in a direction orthogonal to the movement path will be referred to as the first height Y1, and the interval between adjacent primary cores 31 is referred to as the interval Z1. In the second embodiment, the interval Z1 satisfies Z1≤X1.

The secondary core 32 is a magnetic body having a C-shaped cross-section, i.e., a C-shaped core. Each secondary core 32 includes two side portions 32a and an intermediate portion 32b, which is located between the two side portions 32a. Each side portion 32a includes a power receiving surface 32c. The secondary coil L2 is wound around the intermediate portion 32b of the secondary core 32. The power receiving surfaces 32c of the secondary core 32 oppose the power receiving surfaces 31c of the primary cores 31.

In the following description, the length of the secondary core 32, which is measured along the movement path, will be referred to as the second width X2, and the length of the secondary core 32 in a direction orthogonal to the movement path will be referred to as the second height Y2. In the second embodiment, the second width X2 of the secondary core 32 satisfies X2≥2×X1+Z1.

The geometric relationship of the primary core 31 and the secondary core 32 will now be described.

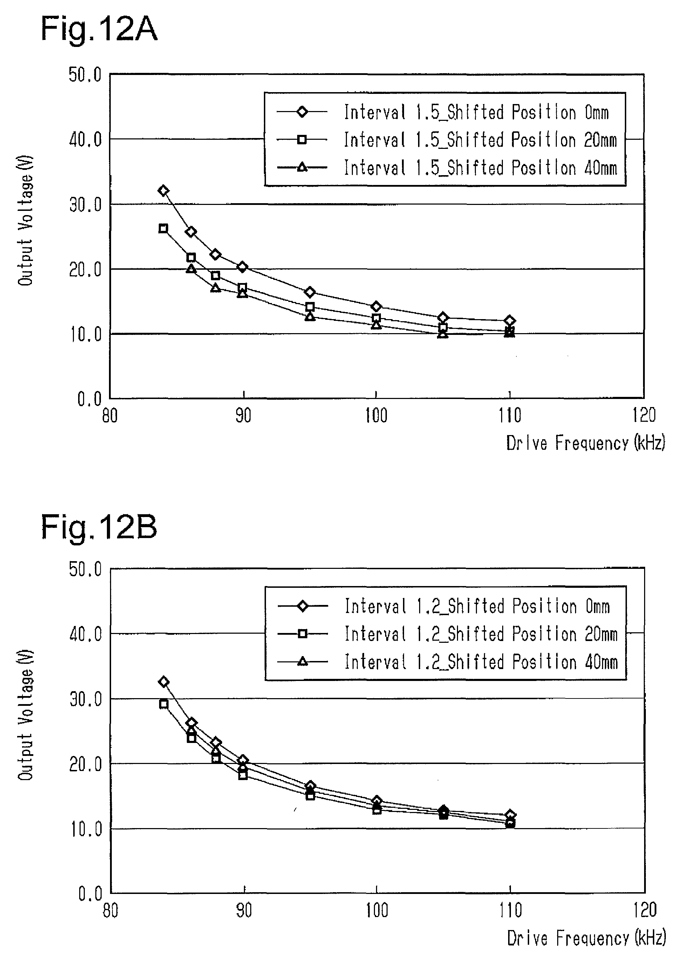

Fig. 12A shows the relationship (resonant characteristic line) of the frequency and the output voltage measured at various shifted positions when the second width X2 of the secondary core 32 is two times larger than the first width X1 of the secondary core 32 (X2=2×X1) and when the interval Z1 is 1.5 times larger than the first width X1 (Z1=1.5×X1).

The first width X1 (=Y1) of the primary core 31 is 42 mm. The second width X2 of the secondary core 32 is 84 mm (=2×X1). The interval Z1 is 63 mm (=1.5×X1). The output voltages corresponding to various frequencies (frequencies of high-frequency current supplied to primary coil L1) were measured with regard to the shifted positions of 0 mm, 20 mm, and 40 mm. The shifted position refers to the shifted length of an edge of the power supplying surface 31c of a primary core 31 from an edge of the power receiving surface 32c of the secondary core 32 in the movement direction when the power receiving surface 32c of the secondary core 32 opposes the power supplying surface 31 c of the primary core 31. As is obvious from Fig. 12A, when the interval Z1 is 1.5 times larger than the first width X1, a plurality of resonant characteristic lines respectively corresponding to various shifted positions are greatly separated and do not coincide with one another.

Fig. 12B shows the relationship (resonant characteristic line) of a frequency and an output voltage measured at various shifted positions when the second width X2 of the secondary core 32 is two times larger than the first width X1 of the secondary core 32 (X2=2×X1) and when the interval Z1 is 1.2 times larger than the first width X1 (Z1=1.2×X1).

The first width X1 (=Y1) of the primary core 31 is 42 mm. The second width X2 of the secondary core 32 is 82 mm (=2×X1). The interval Z1 is 50.4 mm (=1.2×X1). The output voltages corresponding to various frequencies (frequencies of high-frequency current supplied to primary coil L1) were measured for the shifted positions of 0 mm, 20 mm, and 40 mm. As is obvious from Fig. 12B, when the interval Z1 is 1.2 times larger than the first width X1, the resonant characteristic lines corresponding to various shifted positions are closer to one another than those of Fig. 12A.

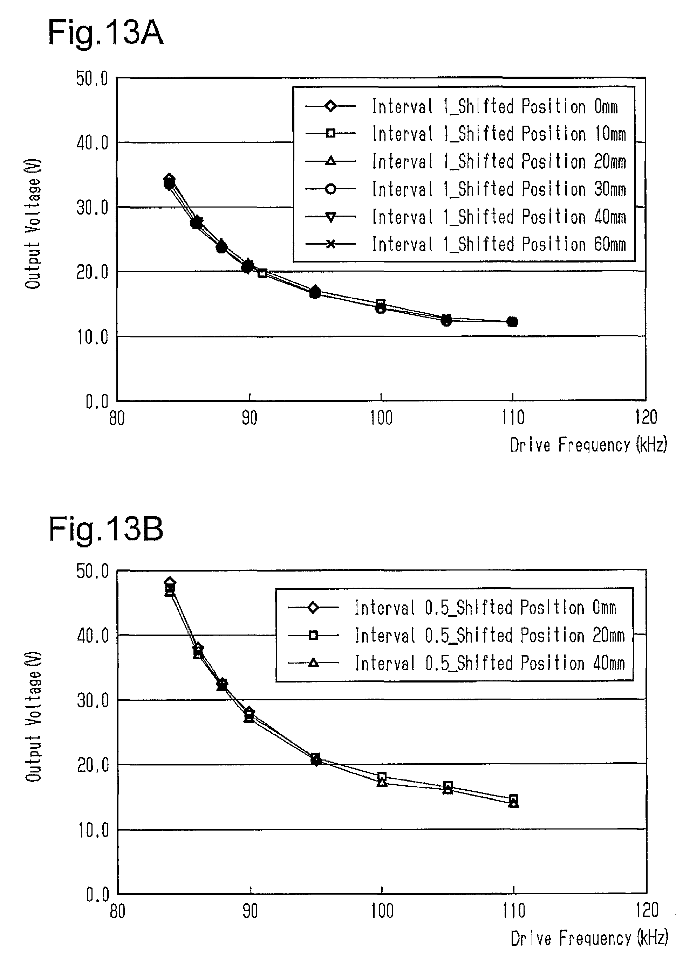

Fig. 13A shows the relationship (resonant characteristic line) of the frequency and the output voltage measured at various shifted positions when the second width X2 of the secondary core 32 is two times larger than the first width X1 of the secondary core 32 (X2=2×X1) and when the interval Z1 is equal to the first width X1 (Z1=X1). The first width X1 (=Y1) of the primary core 31 is 42 mm. The second width X2 of the secondary core 32 is 82 mm (=2×X1). The interval Z1 is 42 mm (=X1). The output voltages corresponding to various frequencies (frequencies of high-frequency current supplied to primary coil L1) were measured for the shifted positions of 0 mm, 10 mm, 20 mm, 30 mm, 40 mm and 60 mm. As is obvious from Fig. 13A, when the interval Z1 is equal to the first width X1, the resonant characteristic lines corresponding to various shifted positions substantially coincide with one another.

Fig. 13B shows the relationship (resonant characteristic line) of the frequency and the output voltage measured at various shifted positions when the second width X2 of the secondary core 32 is two times larger than the first width X1 of the secondary core 32 (X2=2×X1) and when the interval Z1 is 0.5 times larger than the first width X1 (Z1=X1/2). The first width X1 (=Y1) of the primary core 31 is 42 mm. The second width X2 of the secondary core 32 is 82 mm (=2×X1). The interval Z1 is 21 mm (=0.5×X1). The output voltages corresponding to various frequencies (frequencies of high-frequency current supplied to primary coil L1) were measured for the shifted positions of 0 mm, 20 mm, and 40 mm. As is obvious from Fig. 13B, when the interval Z1 is 0.5 times larger than the first width X1, the characteristic lines corresponding to various shifted positions substantially coincide with one another.

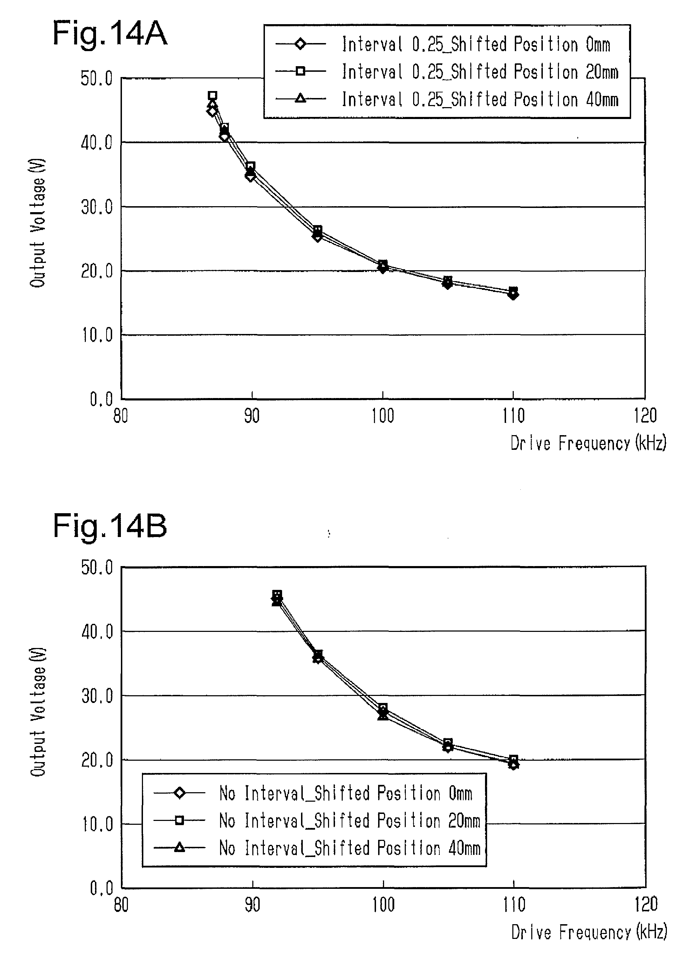

Fig. 14A shows the relationship (resonant characteristic line) of the frequency and the output voltage measured at various shifted positions when the second width X2 of the secondary core 32 is two times larger than the first width X1 of the secondary core 32 (X2=2×X1) and when the interval Z1 is 0.25 times larger than the first width X1 (Z1=X1/4). The first width X1 (=Y1) of the primary core 31 is 42 mm. The second width X2 of the secondary core 32 is 82 mm (=2×X1). The interval Z1 is 10.5 mm (=0.25×X1). The output voltages corresponding to various frequencies (frequencies of high-frequency current supplied to primary coil L1) were measured for the shifted positions of 0 mm, 20 mm, and 40 mm. As is obvious from Fig. 14A, when the interval Z1 is 0.25 times larger than the first width X1, the resonant characteristic lines corresponding to various shifted positions substantially coincide with one another.

Fig. 14B shows the relationship (resonant characteristic line) of the frequency and the output voltage measured at various shifted positions when the second width X2 of the secondary core 32 is two time larger than the first width X1 of the secondary core 32 (X2=2×X1) and when the interval Z1 is 0.125 times larger than the first width X1 (Z1=X1/8). The first width X1 (=Y1) of the primary core 31 is 42 mm. The second width X2 of the secondary core 32 is 82 mm (=2×X1). The interval Z1 is 5.25 mm (=0.125×X1). The output voltages corresponding to various frequencies (frequencies of high-frequency current supplied to primary coil L1) were measured for the shifted positions of 0 mm, 20 mm, and 40 mm. As is obvious from Fig. 14B, when the interval Z1 is 0.125 times larger than the first width X1, the resonant characteristic lines corresponding to various shifted positions substantially coincide with one another.

As is obvious from Figs. 12A, 12B, 13A, 13B, 14A, and 14B, when the interval Z1 satisfies Z1 <X1, the first resonant characteristic line A1 and the second resonant characteristic line A2 are close to each other regardless of where the sliding door 3 is located. In particular, when Z1<(X1/4) is satisfied, the first resonant characteristic line1 and the second resonant characteristic line A2 substantially coincide with each other. Accordingly, the output voltage increases and the varying range G3 further decreases in the configuration in which the interval Z1 satisfies the above geometric condition and in which the frequency fp corresponding to the intersecting point P of the first resonant characteristic line A1 and the second resonant characteristic line A2 is used as the power supplying frequency fn

The operation of the above wireless power supplying system will now be described.

The power supplying frequency fn of the high-frequency current is set to the frequency fp corresponding to the intersecting point P of the first resonant characteristic line A1 and the second resonant characteristic line A2. The high-frequency current having the power supplying frequency fn (=fp) is supplied to the primary coils L1 that are to be excited.

When the sliding door 3 is moved along the door frames 1 and 2 in this condition, the varying range G3 between the output voltages of the secondary coil L2 is relatively small regardless of where the sliding door 3 is located. Further, since the interval Z1 satisfies Z1≤X1 and the second width X2 of the secondary core 32 satisfies X2≥2×X1+Z1, the first resonant characteristic line A1 and the second resonant characteristic line A2 are close to each other regardless of where the sliding door 3 is located. Accordingly, the output voltage further increases and the varying range G3 further decreases in the configuration in which the frequency fp corresponding to the intersecting point P of the first resonant characteristic line A1 and the second resonant characteristic line A2 is used as the power supplying frequency fn.

The output voltage generated at the secondary coil L2 is rectified at the full-wave rectification circuit 21 of the power receiving device 20. The rectified output voltage is output to the voltage stabilization circuit 22 and then output to the electric device E to drive the electric device E.

The second embodiment has the advantages described below.

In the second embodiment, the power supplying frequency fn of the high-frequency current supplied to the primary coils L1 is set to the frequency fp corresponding to the intersecting point P of the first resonant characteristic line A1 and the second resonant characteristic line A2, which are most separated from each other in the varying range. Regardless of where the secondary coil L2 is arranged in the movement range of the sliding door 3, the difference of the maximum value and the minimum value of the output voltage obtained at each position, i.e., the varying range G3 of the output voltage, can be reduced. As a result, stable output voltage can be supplied to the device E regardless of where the sliding door 3 is located.

The frequency fp, which is used as the power supplying frequency fn, is set in advance based on the intersecting point P of the first and second resonant characteristics A1 and A2. Thus, it is only required that the power supplying device 10 supply the high-frequency current having the power supplying frequency fn, which is set in advance, to the primary coils L1. This simplifies the control for the basic power supplying unit circuit 11, simplifies the circuit configuration, and reduces the circuit scale.

In the second embodiment, the interval Z1 satisfies Z1≤X1 and the second width X2 of the secondary core 32 satisfies X2≥2×X1+Z1. This allows the first resonant characteristic line A1 and the second resonant characteristic line A2 to be close to each other regardless of where the sliding door 3 is located. Accordingly, the output voltage further increases and the varying range G3 of the output voltage further decreases in the configuration in which the frequency fp in the intersecting point P of the first resonant characteristic line A1 and the second resonant characteristic line A2 is used as the power supplying frequency fn. This allows a higher output voltage to be obtained, and the DC/DC converter in the voltage stabilization circuit 22 may be omitted.

The embodiments may be modified as follows.

In the first embodiment, X1 and Y1 belong to the primary coil L1, X2 and Y2 belong to the secondary coil L2, and the interval Z1 belongs to adjacent primary coils L1. In another example, X1 and Y1 may belong to the primary core 6, X2 and Y2 may belong to the secondary core 8, and the interval Z1 may belong to adjacent primary cores 6.

In the second embodiment, the primary core 31 and the secondary core 32 have a C-shaped magnetic body as an example. In another example, the primary core 31 and the secondary core 32 may be E-shaped magnetic body cores.

The resonant capacitor C1 does not have to be connected in series to the primary coil L1. Instead, the resonant capacitor C1 may be connected in parallel to the primary coils L1. In the same manner, the resonant capacitor C2 does not have to be connected in series to the secondary coil L2. Instead, the resonant capacitor C2 may be connected in parallel to the secondary coil L2.

The number of secondary coils L2 of the power receiving device 2 does not have to be one. Instead, the power receiving device 20 may include a plurality of secondary coils L2 as long as the above geometric condition is satisfied.

The embodiments are examples in which the power receiving device 20 is arranged in the sliding door 3 that serves as a movable body. However, the power receiving device 20 does not have to be arranged in the sliding door 3. The power receiving device 20 may be arranged in a movable body that moves back and forth, such as a window sash, a shoji, a fusuma, a partition wall, or a sliding door of furniture. The secondary coil L2 of the power receiving device 20 may be arranged in an indoor movable body or in an outdoor movable body as long as the movable body moves along the movement path.

The foregoing description is to be considered as illustrative and not restrictive. For example, the above embodiments or one or more modifications may be used in combination with each other. The subject matter of the present invention may be included in fewer features than all of the disclosed features of the specific embodiments. Accordingly, the claims are incorporated in the detailed description and each claim asserts itself as another embodiment. The scope of the present invention and equivalence of the present invention are to be understood with reference to the appended claims.

## Claims

1. A wireless power supplying system comprising:
a plurality of primary coils, each wound around a primary core, wherein the primary coils are arranged at equal intervals; and
a secondary coil wound around a secondary core and configured to move along a movement path while opposed to the primary coils, wherein
a primary coil excited when supplied with high-frequency current is configured to generate an alternating magnetic field that generates secondary power at the secondary coil,
a resonant circuit including the excited primary coil and the secondary coil has a resonant characteristic changed in a varying range when the secondary coil moves, and
a power supplying frequency of the high-frequency current is set to a frequency corresponding to an intersecting point of a first resonant characteristic line and a second resonant characteristic line that respectively correspond to two ends of the varying range of the resonant characteristic and are most separated from each other.

2. The wireless power supplying system according to claim 1, wherein when a length of each primary coil measured along the movement path is set to X1 and a length of the secondary coil measured along the movement path is set to X2, the length of the primary coil and the length of the secondary coil satisfy X2≥5×X1.

3. The wireless power supplying system according to claim 2, wherein when an interval between the primary coils is set to Z1, the interval between the primary coils and the length of the primary coil satisfy Z1 <X1.

4. The wireless power supplying system according to claim 1, wherein:
each of the primary cores and the secondary core are C-shaped or E-shaped and each of the primary coils and the secondary coil are coils forming a closed magnetic circuit; and
when a length of each of the primary cores is set to X1, a length of the secondary core is set to X2, and an interval between the primary cores is set to Z1, the length of each primary core, the length of the secondary core, and the interval between the primary cores satisfy Z1≤X1 and X2≥2×X1+Z1.

5. A wireless power supplying system comprising:
a power receiving device including a secondary coil arranged to be movable along a movement path; and
a power supplying device including a plurality of primary coils arranged in the movement path at equal intervals, wherein:
a resonant frequency of a primary resonant circuit, which includes a primary coil supplied with high-frequency current, and a secondary resonant circuit, which includes the secondary coil, changes in a varying range between a first end resonant frequency and a second end resonant frequency when the secondary coil moves along the movement path;
the power supplying device includes a coil exciting circuit configured to supply high-frequency current of a fixed frequency to a primary coil that is to be excited; and
the fixed frequency is set to a frequency corresponding to an intersecting point of a first resonant characteristic line, which includes a peak at the first end resonant frequency, and a second resonant characteristic line, which includes a peak at the second end resonant frequency.

6. A method for operating a wireless power supplying system comprising:
a power receiving device including a secondary coil arranged to be movable along a movement path; and
a power supplying device including a plurality of primary coils arranged in the movement path at equal intervals, wherein
a resonant frequency of a primary resonant circuit, which includes a primary coil supplied with high-frequency current, and a secondary resonant circuit, which includes the secondary coil, changes in a varying range between a first end resonant frequency and a second end resonant frequency when the secondary coil moves along the movement path, the method for operating a wireless power supplying system comprising:
specifying a frequency corresponding to an intersecting point of a first resonant characteristic line, which includes a peak at the first end resonant frequency, and a second resonant characteristic line, which includes a peak at the second end resonant frequency;
setting the frequency corresponding to the intersecting point as a fixed frequency of the high-frequency current supplied to the primary coils; and
supplying the high-frequency current having the fixed frequency to an excited coil.
